# EUROPEAN PATENT APPLICATION

(11) **EP 1 049 098 A2**
(43) Date of publication of application: **02.11.2000**
(21) Application number: 00401149.0
(22) Date of filing: 26.04.2000
(51) Int. Cl.: G11B 27/10, H04N 5/85

(54) **Method and apparatus for controlling presentation of digital video data**

(30) Priority: 29.04.1999 US 131534 P; 30.06.1999 US 343764
(71) Applicant: Thomson Licensing S.A., 92100 Boulogne-Billancourt (FR)
(72) Inventor: Lampe, Mark J., 92648 Boulogne Cedex (FR); Rich, Michael D., 92648 Boulogne Cedex (FR)
(74) Representative: Kohrs, Martin

(57) **Abstract**

A method and an apparatus for allowing a viewer to set arbitrary edit points that define a program segment for omission during a program presentation. The present invention is particularly suitable for use with program data comprising video data and associated control data formatted in accordance with the DVD specification. The present invention allows the user to define arbitrary program segment boundaries by creating microcells which are stored in a secondary table. The parameters in the microcell are used to provide seamless presentation of a program which includes cells and microcell. The microcells are an overlay to the presentation data on the disc, and thus, does not affect the underlying presentation data.

## Description

This application claims the benefit of U.S. Provisional Application 60/131,534, filed April 29, 1999.

### BACKGROUND OF THE INVENTION

### 1. Field of the Invention.

The present invention relates to a method and an apparatus for controlling presentation of a program based on a digital data stream, and in particular, a method and an apparatus for allowing a user to selectively omit presentation of arbitrarily designated potions of the program.

### 2. Related Art.

Video signal processing systems that utilize storage media having digitally compressed video and audio information recorded thereon can give the user a vast number of options for controlling presentation of a program, or a video title, stored on such a media. One such system that is gaining rapid popularity comprises a video disc player adapted to process information stored in accordance with the digital video disc (DVD) specification. The information on a DVD formatted disc is recorded as discrete packets of data, in accordance with a video and audio data compression standard, wherein designated packets carry data associated with various data streams, such as alternative video angles, audio tracks, sub-picture streams, etc. A video disc player reading a DVD formatted disc may be controlled to display or present certain packets of data and skip over others. Using this capability, the DVD system can allow the disc author to provide multiple variations of a program on a single disc to suit the preferences of the viewer.

One useful application of the seamless branching and multiple variation feature of the DVD system relates to parental control of material that can be presented from a particular disc player. Typically, a DVD player allows the user to select a parental control rating, for example, varying from 1 to 8, wherein 1 is the least restrictive rating and 8 is the most restrictive rating. The DVD player then automatically restricts the presentation of discs, video titles on a disc, or scenes in a video title in accordance with the parental rating authored on the disc or video title. The parental ratings generally correspond to, for example, the movie rating of the Motion Picture Association of America (MPAA).

During disc presentation, the DVD player compares the viewer selected parental rating against the parental rating information associated with the disc or program and only allows presentation of the disc, program or selected portions from the program if the user selected parental rating equals or exceeds the parental rating of the disc or program. In the case of multiple presentation sequences, the DVD player presents the sequence having a parental rating that corresponds to the user selected parental rating.

One disadvantage of the above-described system is that the disc author defines the presentation sequences associated with each of the parental ratings and the end user cannot change these predefined presentation sequences. Since the sequence of scenes associated with a particular parental rating is set by the disc author, the end user can only select from one of the defined sequences. Such a system can be problematic because the end user may not always agree with the disc author's scene selection for a particular parental rating. For example, even a G rated movie may include scenes that may be unsuitable for a very young child, or may be offensive to a particular individual. Also, a viewer may wish to omit a scene from a program for a reason totally unrelated to parental control issues, for example, because the scene is boring.

In this regard, many DVD players give the user the ability to define a presentation sequence based on defined blocks of data, such as part of titles, also known as chapters, and the viewer has the option of not presenting the block of data that includes the undesirable material. However, the blocks are still defined by the disc author and may be relatively long in duration. Thus, the end user still does not have the ability to omit presentation of particular scenes across arbitrary boundaries.

Also, some systems provide the user with the ability to create various sequences of program segments based on user entered preferences. In such systems, a disc author provides a multitude of program segments, each of which have a set of ratings associated with them, for example, for violence, language, etc. In response to the user selection of a particular level of violence, language, etc., the system automatically strings the appropriate program segments together to generate a program that satisfies a user selected criteria. However, in such systems, the ratings associated with the program segments is still defined by the disc author, or the program source, and the viewer still has does not have the ability to selectively delete portions of the program segments, some of which may be very short in duration.

Therefore, what is needed is a method and an apparatus for allowing a viewer to delete arbitrary portions of a program that is based on a digital video data stream, irrespective of scene boundaries, or ratings, that may been defined by the author or provider of the program data.

In particular, what is needed is a method and an apparatus for allowing a user to edit out portions of a program based on a digital video data stream irrespective of scene boundaries, or rating, that may have been defined by the author or provider of the program data, in a manner that is compatible with the DVD specification.

Also, what is needed is a method and an apparatus that allows a user to edit out arbitrary portions of a program in a manner that is compatible with the DVD standard and does not alter the program sequence define by the data source, thereby allowing the original program sequence to be easily restored without being forced to reload the original program data.

### SUMMARY OF THE INVENTION

The present invention allows a user to select arbitrary edit points in a program wherein the program material in the interval between the arbitrary edit points is omitted during presentation of the program. The present invention is particularly suitable for used in a system comprising a source of program data comprising a plurality of digital video data units and control data units, each digital video data unit corresponding to a predetermined program segment, and a display device adapted to retrieve the data units and present a sequence of video data units. A method in accordance with the present invention comprises the steps of: defining a first arbitrary edit point in the selected sequence of video data units in response to a first user input; defining a second arbitrary edit point in the selected sequence of video data units in response to a second user input; and presenting the selected sequence of video data units while omitting video data included in the interval between the first and second arbitrary edit points.

Further, a video processing apparatus according to the present invention comprises: a transducer for retrieving digital program data from a source, the program data comprising a plurality of program data units and control data units, each program data unit corresponding to a predetermined program segment, the program data including data defining a sequence of program data units, the transducer retrieving a sequence of data units in response to a user input and providing digitally encoded data; a decoder coupled to the transducer for decoding a display from the digitally encoded data; and a controller coupled to the decoder and transducer, the controller defining a first arbitrary edit point in the sequence of program data units in response to a first user input and a second arbitrary edit point in the sequence of program data units in response to a second user input, the controller causing the decoder to omit displays associated with program data in the interval between the first arbitrary edit point and the second arbitrary edit point.

The present invention provides an overlay to the conventional DVD presentation scheme. Therefore, the present invention does not alter the presentation sequence defined in the primary tables and the present user editing feature may be removed, and the original presentation scheme restored, simply by deleting the flag and the micro-cell definition in the secondary table.

### BRIEF DESCRIPTION OF THE DRAWINGS

The invention will be described with reference to the accompanying drawings, wherein:
Fig. 1 is a block diagram of a digital video disc player suitable for implementing the editing feature of the present invention;
Fig. 2 is a diagram of a data structure in accordance with the DVD format and suitable for implementing the editing feature of the present invention;
Fig. 3 is a block diagram of a presentation structure in accordance with the DVD format and suitable for implementing the editing feature of the present invention;
Fig. 4 illustrates arbitrary edit points A and B defined in two different cells;
Fig. 5 illustrates arbitrary edit points A and B defined in the same cell; and
Fig. 6 illustrates arbitrary edit points A and B defined within a microcell.

### DETAILED DESCRIPTION

Although the exemplary embodiment is described with reference to a digital video apparatus adapted to read compressed program data comprising video and audio data from a disc and to process the data in accordance with the DVD specification, it is to be understood that the present invention may be used in any video processing apparatus capable of processing digital video and audio information, wherein program related information included with the video and audio information can be used to selectively present the program information on the disc.

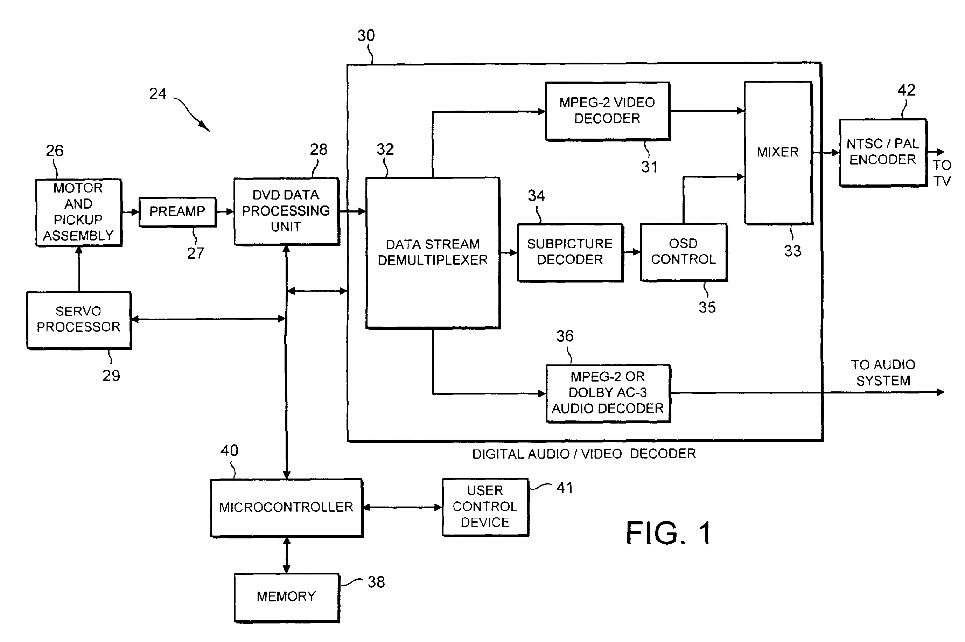

Fig. 1 is a block diagram showing the basic elements of an exemplary digital video disc player suitable for controlling the presentation of digital video data in accordance with the present invention. The construction and operation of these elements are generally known and will not be discussed in detail here. Disc player 24 comprises motor and pickup assembly 26 that spins the disc and reads the information stored thereon under the control of servo processor 29. Preamp 27 and DVD data processing unit 28 translate the electrical pulses from motor and pickup assembly 26 into digital data that can be further processed by digital audio/video decoder unit 30. DVD data processing unit 28 typically performs functions such as demodulation, error correction and descrambling of the raw data read from the disc to provide digitally encoded data in a suitable format for decoder unit 30.

Decoder unit 30 receives the digitally encoded data, processes the data, and provides the appropriate video and audio signals to a display unit, such as a television set. Decoder unit 30 comprises data stream de-multiplexer 32 which demultiplexes the data from data processing unit 28 into a plurality of separate data streams, including, for example, a video stream, an audio stream and a sub-picture stream, and provides the data streams to their respective data decoders. Video decoder 31 receives the video stream, decodes the signal in accordance with the MPEG-2 standard and provides a video signal to mixer 33. Sub-picture decoder 34 receives the sub-picture stream and provides data to on screen display (OSD) control 35 which provides OSD video signals to mixer 33. The combined video signal from mixer 33 is provided to NTSC/PAL encoder 42 which provides a video signal that conforms to the appropriate video signal standard to a video display device. Audio decoder 36 receives the audio streams from data stream demultiplexer 32 and provide the appropriate audio signals to an audio system.

Microcontroller 40 controls the operation of disc player 24. Microcontroller 40 is coupled to user control device 41, which may comprise IR remote control devices, front panel buttons or the like. Microcontroller 40 translates data from user control device 41 to control the operation of the various elements of disc player 24 described above. Typically, microcontroller 40 is also configured to control various access features of disc player 24 including, but not limited to, parental lock out, decryption of encrypted discs, dialing remote controllers to gain access to encrypted discs. Microcontroller 40 may be embodied in various forms, including, but not limited to, a dedicated integrated circuit, or a part of a decoder/controller unit. Microcontroller 40 may be comprised of one of a plurality of suitable controller units, including, but not limited to STI 5500, manufactured by SGS Thomson.

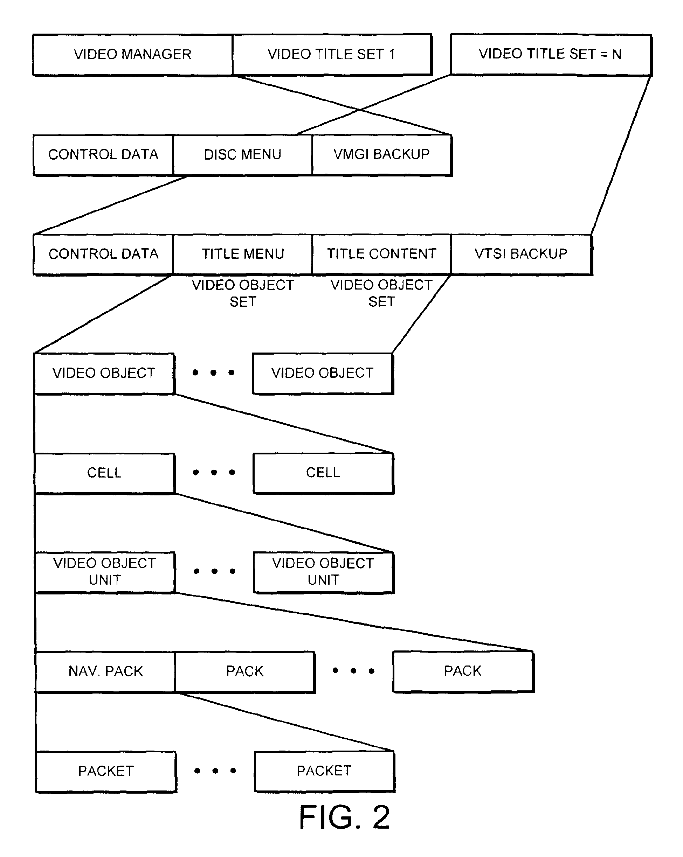

Fig. 2 illustrates the structure of the program data and control data stored on a disc in accordance with the DVD specification and suitable for use with disc player 24. The data structure is hierarchical, wherein each data block is divided up into component data blocks, which are further divided into smaller component data blocks. Each video title set, which corresponds to a designated program unit, for example, a movie or an episode of a television show, is comprised of video object sets, which comprises a plurality of video objects.

Each video object is comprised of a plurality of cells, which may be considered a data unit for presentation having a plurality of data unit types, such as video, audio, subpicture, etc, and corresponds to a program segment. Each cell is in turn comprised of a plurality of video object units (VOBUs). Each VOBU is comprised of a navigation pack (NAV_PACK) and a plurality of packs, which are subdivided into a plurality of packets. A VOBU generally corresponds to an MPEG-2 Group of Pictures (GOP) with an associated control data structure, the NAV_PACK. The NAV_PACK of each VOBU contains information such as sector addresses of VOBUs relative to the current one (both forwards and backwards in temporal presentation order), and the amount of elapsed time in cell presentation which corresponds to the current VOBU.

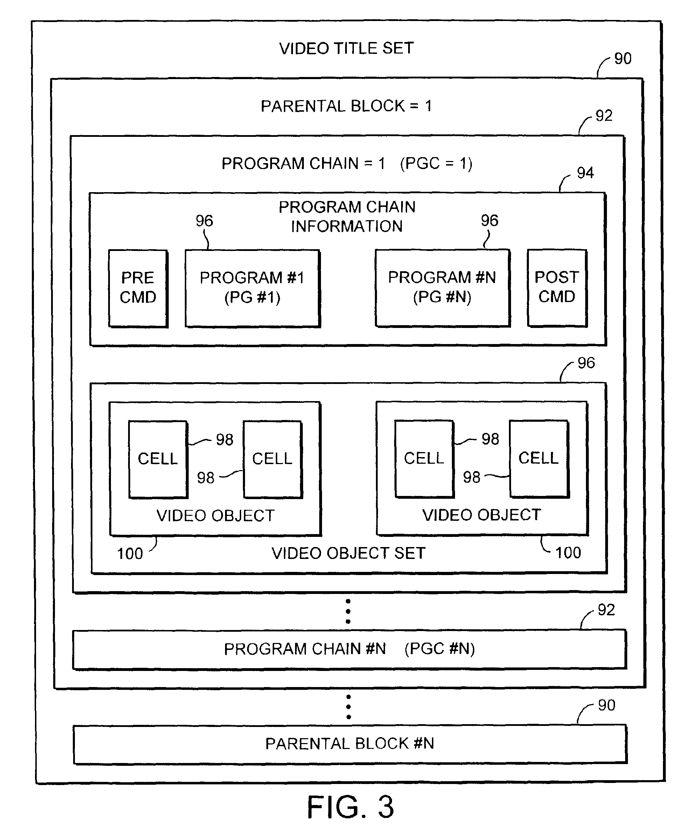

Data stored in accordance with the DVD specification is also logically organized into a presentation structure in order to provide flexibility in the manner in which the data can be presented. Fig. 3 illustrates the presentation structure in accordance with the DVD specification and suitable for use with disc player 24. This presentation structure is overlaid onto the data structure of Fig. 2. At the base level, the presentation sequence is defined by programs (PGs) 96, each of which comprise a linked list of pointers to cells. A plurality of PGs 96 may be combined to form a program chain information (PGCI) 94, a plurality of which may in turn be combined to form program chain (PGC) 92.

During presentation of a video titles, disc player 24 selects the appropriate PGC for loading into a primary table, based on such criteria as the user selected title and parental rating preference. Thereafter, disc player 24 reads the data stored on the disc based on the linked list of pointers contained in the PGs. As is known, disc players generally utilize various look ahead algorithms in order to read the data from the disc and store the data on a system buffer prior to actual presentation in order to provide seamless presentation.

As noted above, the present invention recognizes that the parental control feature may not be totally satisfactory because the sequence of scenes and program boundaries are selected by the disc author and an end user is unable to arbitrarily edit out particular scenes that they find objectionable. Therefore, the present invention allows the user to select arbitrary edit points to allow the user to create his/her own presentation sequence. The implementation of arbitrary edit points is accomplished by creating a new data structure that is overlaid onto the existing data structure formatted in accordance with the DVD specification.

In particular, the present invention creates and stores a microcell, which is an intermediate structure to the cell and the VOBUs. The microcell comprises parameters associated with a cell segment and is stored in a secondary table defined by microcontroller 40. For example, a microcell table may look like: 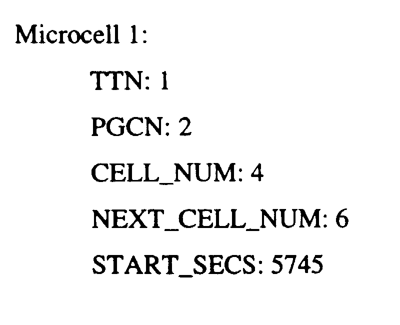 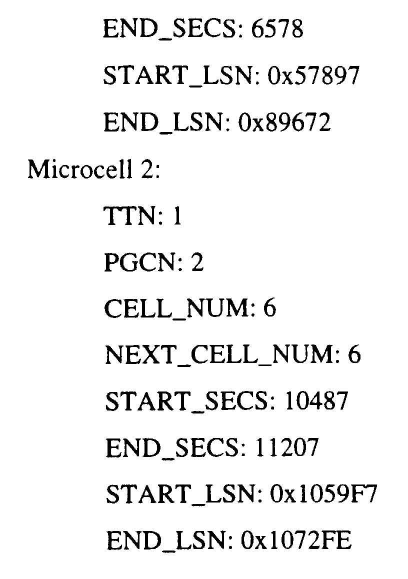 The information in the secondary table is accessed by microcontroller 40 during presentation of data from the disc. Since the microcell is a subset of a cell, a microcell encompasses a series of VOBUs that are a subset of the VOBUs of the original cell. The microcells may be designed to include any number of parameters included in the original cell, including, but not limited to, PGC number, Cell number, start sector, end sector, start sector time, and end sector time. The microcells include the parameters necessary to retrieve and present the subset of VOBUs. It can be seen that the microcell may include any set of parameters designated by the programmer.

Using an intermediate level microcell to define a segment of a cell is advantageous because such a structure fits wells within the current models that DVD players use to present cells. A minimal amount of logic can be added to handle presentation of microcells and the same techniques to be reused for implementing various tricks in presentation such as shuffle, randomization, and trick-modes such as fast-forward and reverse may be used. The microcells allow the segmenting of the existing cell structure so that algorithms for presenting the data having the cell structure can be used to present data having cells and microcells. These modes can work flawlessly even when segments of content have been selected for omission.

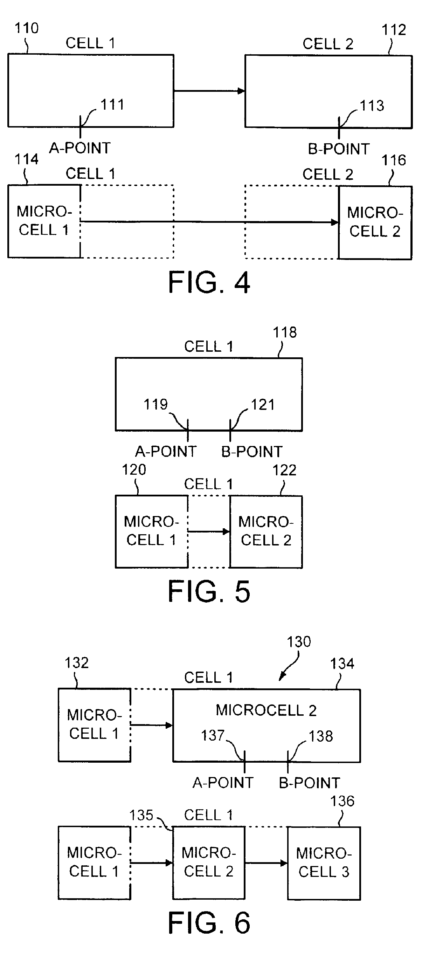

In creating microcells, there are three boundary conditions to consider:
1. The A point and B point lie in different cells;
2. The A point and B point lie within the same cell; and
3. The A point and B point lie within the same microcell.
These boundary conditions are discussed with reference to Figs. 4-6.

In Fig. 4, start point A 111 is located in cell 110 and stop point B 113 is located in cell 112. In response to user input, microcontroller 40 creates microcell 114 which has a start boundary corresponding to the start boundary of cell 110 and a stop boundary a start point A 111, and microcell 116 which has a start boundary of stop point B 113 and a stop boundary corresponding to the stop boundary of cell 112.

In Fig. 5, start point A 119 and stop point B 121 are located in cell 118. In response to user input, microcontroller 40 creates microcell 120 having a start boundary corresponding to the start boundary of cell 118 and a stop boundary at start point A 119, and microcell 122 having a start boundary at stop point B 121 and a stop boundary corresponding to the stop boundary of cell 118.

In Fig. 6, microcells 132 and 134 are associated with cell 130, and new microcells 135 and 136 are created from start point A 137, stop point B 138, and the start and stop boundaries of microcell 134.

A pseudo-code algorithm for creating microcells to meet the conditions of Figs. 4-6 is listed below.

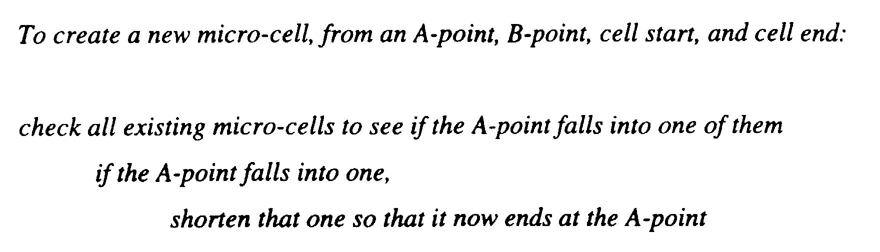

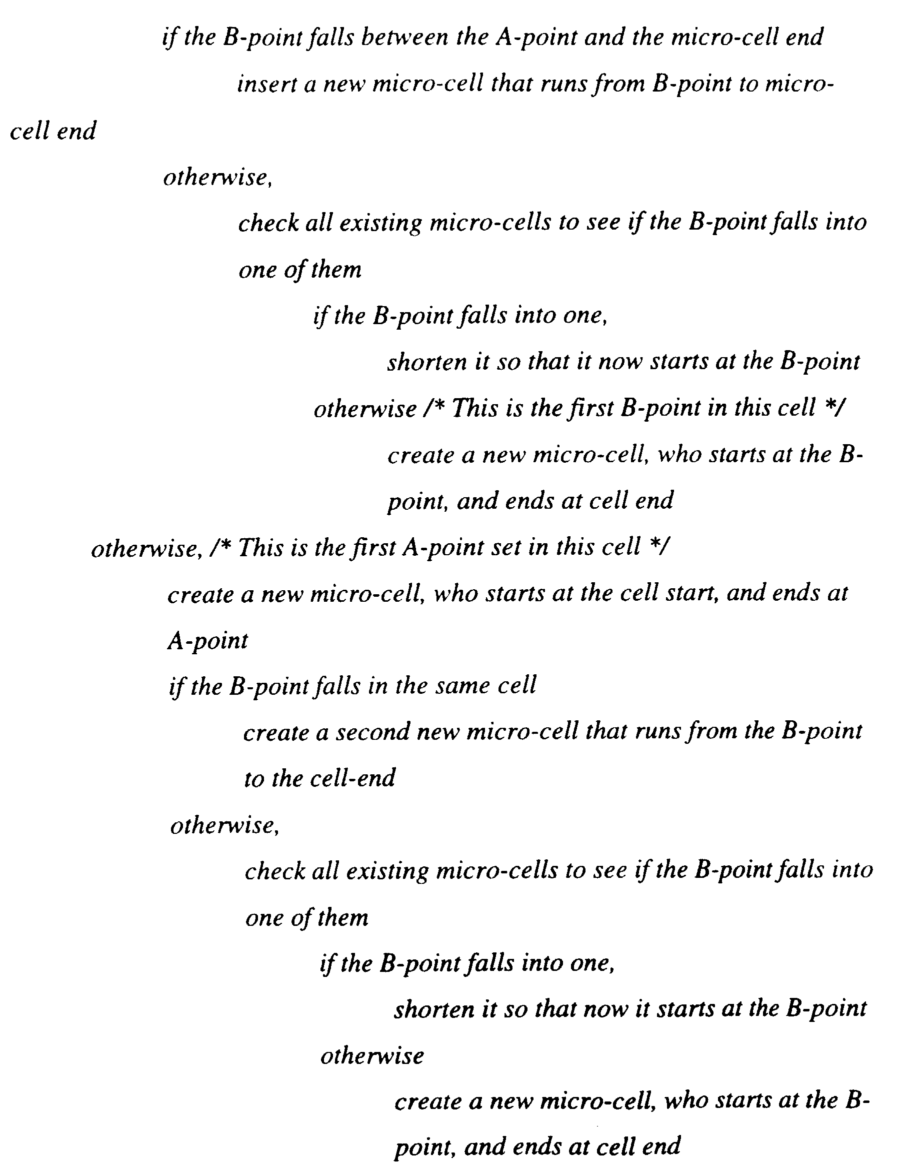

To create the microcells, the viewer initially selects a set of A and B points that define respective start and stop points for the portion of the video data to be omitted. These points may be selected using any one of the known user interface methods. For example, one method is to have the viewer view an unaltered version of the program and enter the omission start and stop points as desired. In such a method, the viewer selects the A and B points by pressing a button on a remote control, using an on-screen display (OSD), or other user interface methods known in the art, as the program is presented.

During normal operation of disc player 24, NAV_PACKS are parsed from the bitstream as the accompanying VOBUs are encountered, decompressed and presented. One means of determining the location of start point A and stop point B is to simply reference the most recently parsed NAV_PACK at the moment the viewer selects the start point A or stop point B. When the viewer selects a start point A, the most recently parsed NAV_PACK sector address is saved and associated with that start point A. When the viewer selects a stop point B, the most recently parsed NAV_PACK sector address is saved and associated with that stop point B. These sector addresses are then used to create the microcells. The data associated with the microcells is stored in a secondary table.

Once microcells have been created using the above algorithm, presentation of the microcells essentially follows the same rules as presenting multiple cells within a program. As the each cell in the sequence of cells is selected for presentation, microcontroller 40 determines whether a microcell is associated with the next cell. If so, microcontroller 40 accesses the parameters of the microcell from the secondary table and presents the VOBUs associated with that microcell. When presentation of those VOBUs is complete, microcontroller 40 presents the subsequent cell or microcell in the sequence. As each microcell is finished being presented within a cell, the next microcell or cell is selected based on the direction of presentation. If all of the microcells within a cell have been presented, then the cell presentation stage continues as it normally would for a Cell without any microcells.

As an example, with reference to Fig. 4, as microcontroller 40 prepares to presents cell 110, it determines that associated microcell 114 exits, reads the secondary tables and presents the appropriate VOBUs for microcell 114. In looking ahead, microcontroller 40 determines that cell 112 includes microcell 116, reads the parameters associated with microcell 116, and when presentation of microcell 114 is complete, presents the VOBUs associated with microcell 116. Thereafter, presentation of the cells continues in the normal manner.

Below is a pseudo-code algorithm to accomplish the selection of microcells in presentation:

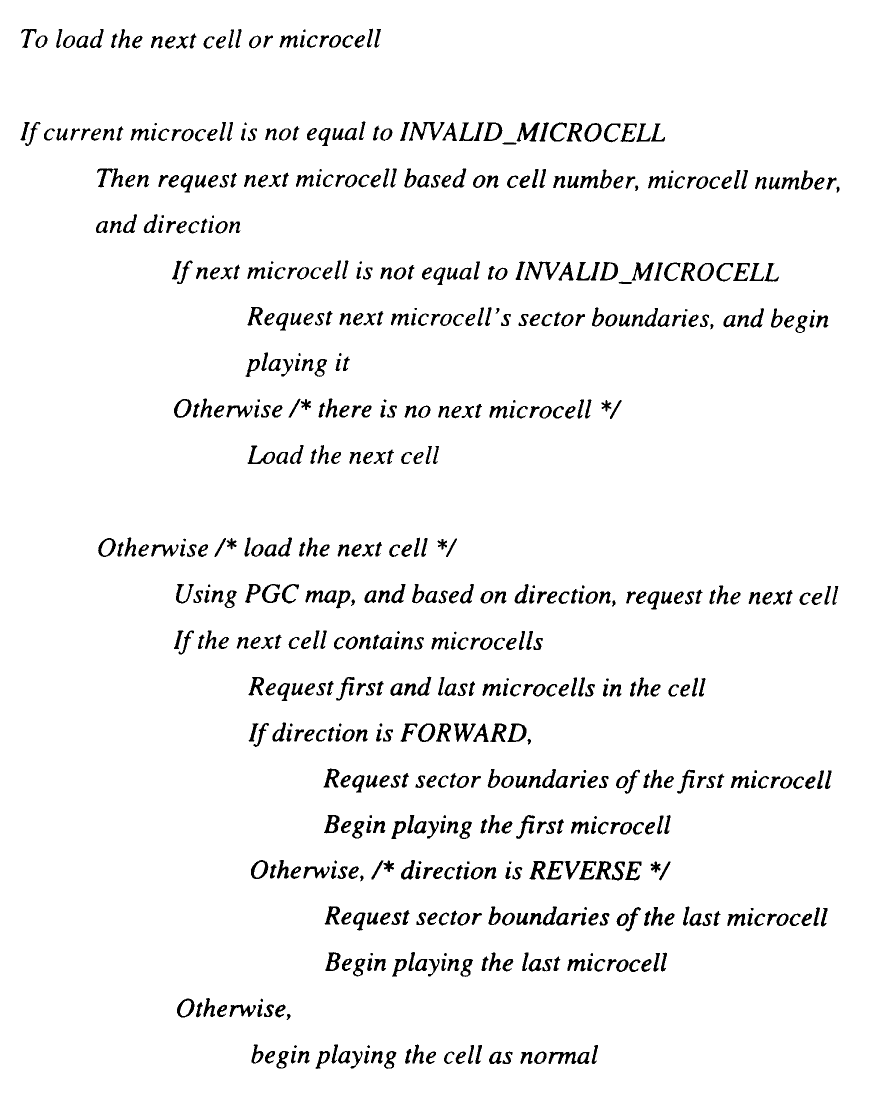

It can be seen that creating microcells to segment the existing cell structure is advantageous because the underlying PG and cell structure is not altered. Instead, a microcell is created by creating a separate linked list of pointers that can be accessed by microcontroller 40, without altering the original PGs. Therefore, the microcells may be easily deleted without affecting the originally stored PGC information by deleting the information in the secondary table, thereby removing the edits.

It will be apparent to those skilled in the art that although the present invention has been described in terms of an exemplary embodiment, modifications and changes may be made to the disclosed embodiment without departing from the essence of the invention. For example, a password challenge may be provided to give the viewer the option of overriding the edit points as the edit points are encountered during presentation. Also, the viewer may be given the option of setting arbitrary edit points by entering presentation times corresponding to specific points in the presentation rather that having to view an unedited presentation. The microcells are then created in the manner described above. Also, only certain designated, or user selected, types of data units, for example, video, audio, subpicture, etc, may be omitted during the edit interval.

It is herein recognized that the present edit feature may be implemented using any one of a number of conventionally known methods, or combination of methods, for controlling the various elements of disc player 24 described above, for example by using embedded software in a microcontroller. Therefore, it is to be understood that the present invention is intended to cover all modifications as would fall within the true scope and spirit of the present invention.

## Claims

1. In a video signal processing system, a method for controlling playback of a selected sequence of video data units comprising the steps of:
retrieving a sequence of video data units, a control data units, processing the video data units in response to the control data units; and
presenting the processed video data units, characterized by
defining a first arbitrary edit point (A-point) in the selected sequence of video data units (cell) in response to a first user input;
defining a second arbitrary edit point (B-point) in the selected sequence of video data units (cell) in response to a second user input; and
presenting the selected sequence of video data units while omitting video data included in the interval between the first and second arbitrary edit points.

2. The method according to claim 1, characterized in that the processing step comprises processing the video data units (cell) in accordance with the DVD specification.

3. The method according to claim 2, characterized in that the retrieving step comprises retrieving a linked list of pointers defining the sequence of video data units (cell) and storing the linked list in a primary table.

4. The method according to claim 3, characterized in that the step of defining a first arbitrary edit point (A-point) comprises defining a first partial video data unit (microcell 1), a boundary of the first partial video data unit corresponding to the first arbitrary edit point (A-point), and storing data defining the first partial video data unit in a secondary table, the step of defining a second arbitrary edit point (B-point) comprises defining a second partial video data unit (microcell 2), a boundary of the second partial video data unit corresponding to the second arbitrary edit point (B-point), and storing data defining the second partial video data unit in a secondary table.

5. The method according to claim 4, characterized in that the displaying step comprises determining whether a corresponding partial video data unit exists for a next video data unit to be displayed, and if so, displaying the corresponding partial video data unit rather than the next video data unit.

6. In a video signal processing, a method for controlling playback of a selected sequence of video data, comprising the steps of:
retrieving presentation data units and control data units, each presentation data unit comprising a plurality of data unit types and corresponding to a predetermined program segment, processing the presentation data units in response to the control data units; and displaying the processed data units, characterized by
retrieving program data (video manager) defining a sequence of presentation data units and storing the program data in a primary table;
defining a first program segment having an arbitrary start point (A-point) and an arbitrary end point (B-point) in response to user input, the first program segment including a subset of a presentation data unit, the first program segment being defined in a secondary table; and
presenting the sequence of presentation data units while omitting the first program segment.

7. A digital video system, comprising:
a transducer (26) for retrieving digital program data from a source, the program data comprising a plurality of program data units (cell) and control data units (NAV_PACK), each program data unit corresponding to a predetermined program segment, the program data including data defining a sequence of program data units, the transducer retrieving a sequence of program data units in response to user input and providing digitally encoded data;
a decoder (28, 30) coupled to the transducer for decoding a display from the digitally encoded data; and
a controller (40) coupled to the decoder and transducer, characterized in that the controller defines a first arbitrary edit point (A-point) in the sequence of program data units in response to a first user input and a second arbitrary edit point (B-point) in the sequence of program data units in response to a second user input, and causes the decoder (28, 30) to omit program data in the interval between the first arbitrary edit point and the second arbitrary edit point.

8. The digital video system according to claim 13, characterized in that the decoder decodes the display according to the DVD specification.

9. The digital video system according to claim 14, characterized in that the controller defines a first arbitrary edit point (A-point) by defining a first partial data unit (microcell 1) in response to the first user input and defines the second arbitrary edit point (B-point) by defining a second partial data unit (microcell 2) in response to the second user input.
